# EUROPEAN PATENT APPLICATION

(11) **EP 0 722 047 A2**
(43) Date of publication of application: **17.07.1996**
(21) Application number: 96100089.0
(22) Date of filing: 04.01.1996
(51) Int. Cl.: F16B 5/00, E06B 3/96, F16B 12/24

(54) **Connector for connecting together two generally elongate members**

(30) Priority: 12.01.1995 GB 9500589
(71) Applicant: TEKNOLUX LIMITED, Bo Ness, West Lothian LE7 8FP (GB)
(72) Inventor: Hibberts Peter David, Alsager Stoke-on-Trent ST7 2US (GB); Webster David, North Frodingham Driffield YO25 8LB (GB)
(74) Representative: Lucking, David John

(57) **Abstract**

A connector (20) for connecting together two generally elongate members (11, 12) which may have mitred end or other faces (13,14) adapted to be joined together by the connector (20), comprises first and second parts (21, 22) arranged side by side, the first and second parts (21, 22) each having a first side wall (24) arranged in two sections (25, 26) with a step (27) between the sections, the steps extending from one end of the connector (20) towards the other end, and a second side wall of each part (21, 22) generally converging with the opposite first side wall (24), such that each part of the connector has a thickness where the first and second parts (21, 22) meet, less than the thickness of the connector at a side edge (32) thereof.

## Description

This invention relates to a connector for connecting together two generally elongate members which have faces adapted to be joined by the connector.

It has been proposed in GB 2076924, in figures 1 to 6, to provide a connector comprising two parts arranged side by side, each part being of wedge shape in cross section, with a minimum thickness at a line along which the two parts join. Each part of the connector is received in a correspondingly shaped slot in a respective mitred end face, the wedge configuration of the parts thus drawing the mitred end faces together.

In the same document, figure 8, there is proposed a similar connector in which each of the parts is not of wedge shape but has a stepped configuration.

In GB 2213900 an alternative form of connector is described in which each of the parts has a plurality of grooves provided therein. However, although such a connector may provide for added resistance to the connector being pulled laterally out of the slots, the connector cannot act to draw the mitred end faces together. Also, there are problems in providing slots of such complex configuration in the mitred end faces, particularly where the generally elongate members are made of timber.

It is an object of the present invention to provide a new or improved connector.

According to a first aspect of the invention we provide a connector for connecting together two generally elongate members which have faces adapted to be joined together by the connector, the connector comprising first and second parts arranged side by side, the first and second parts each having a first side wall arranged in two sections with a step between the sections, the steps extending from one end of the connector towards the other end, and a second side wall of each part generally converging with the opposite first side wall, such that each part of the connector has a thickness where the first and second parts meet, less than the thickness of the connector at a side edge thereof.

Thus the connector provides both the advantages of a connector having wedge shaped parts in drawing the faces of the generally elongate members together, whilst the steps provide for additional resistance to pull-out of the connector parts laterally from their slots. The slots in the faces are also relatively simple to produce.

Preferably, the second side wall of each part is also arranged in two sections with a step between the sections, the sections of the second side wall of each part generally converging with the opposite first side wall sections.

The connector may be the sole means of connecting together the two generally elongate members, or a plurality of such connectors may be provided for connecting the faces together. If desired, the or each connector may be adhered in position, with a suitable adhesive, and to assist this, the side wall surfaces of the connector may have grooves formed therein which allow liquid adhesive to spread over the entire side wall surfaces of the connector.

Also, where the slots in the faces of the generally elongate members do not extend right way across the faces, such that a blind hole is presented to the connector when the faces are brought together, such grooves allow for the escape of air which may otherwise be trapped in the blind hole between the blind end of the hole and an end surface of the connector.

The connector may be made of plastics e.g. an elastomeric reinforced nylon, or of timber or of any other suitable material as desired.

Preferably the connector is adapted to be received in the slots of the faces in a direction from the outside or inside of the frame. The invention is particularly applicable to a mitred joint in which case the slots are formed in mitred end faces of the elongate members. End surfaces of the two parts at one end of the connector may thus be at, or substantially at, 90° to one another so as to lie generally in the same plane, as the external or internal surfaces of the generally perpendicular generally elongate members, from which the slots extend.

The opposite end surfaces of the two parts of the connector may be arranged to be shaped to conform to the end faces of the slots in the mitred end or other faces of the generally elongate members such that no cavity is provided between the opposite end surfaces and the end faces of the slots.

According to a second aspect of the invention we provide a method of making a frame comprising the steps of taking two generally elongate members and providing a face on each, providing a slot in each of the faces to receive part of a connector, the slots each comprising a first side wall arranged in two sections with a step between the sections, and a second side wall which generally converges with the opposite first side wall so that each slot has a minimum dimension where the slot opens to the face and a maximum dimension within the thickness of the generally elongate member, the slots each being adapted to receive a part of a connector in accordance with the first aspect of the invention.

Where the faces provided on the elongate member are mitred end faces, preferably the slots open to the mitred end faces and extend in a direction from what will be the outside of the frame towards what will be an opening defined by the frame, and the slots terminate without extending right across the mitred end faces such that when the mitred end faces are brought together, a blind hole is presented to the connector. However, the slots may extend from the frame opening towards the external or outside of the frame if desired.

In each case, preferably the extent of the slots across the mitred end faces and the length of the connector are such that when the connector is fully introduced into the slots, the innermost end surfaces of the parts of the connector lie in contact with, or at least very closely adjacent to, the end faces of the slots, and the opposite end surfaces of the parts of the connector lie at least close to the external surfaces of the generally perpendicular generally elongate member from which the slots extend.

According to a third aspect of the invention we provide a frame made by the method of the second aspect of the invention.

The invention will now be described with reference to the accompanying drawings in which:
FIGURE 1 is an illustrative perspective view of part of a frame comprising two generally elongate members connected together by a connector in accordance with the invention,
FIGURE 2 is an illustrative perspective view of a connector in accordance with the invention for connecting the generally elongate members of the frame as shown in figure 1, also showing part of the frame,
FIGURE 3 is a side view of the connector of figure 2,
FIGURE 4 is a plan view of the connector of figure 2, and
FIGURE 5 is a cross sectional view through the connector of figures 2 to 4, along the line 4-4 of figure 4.

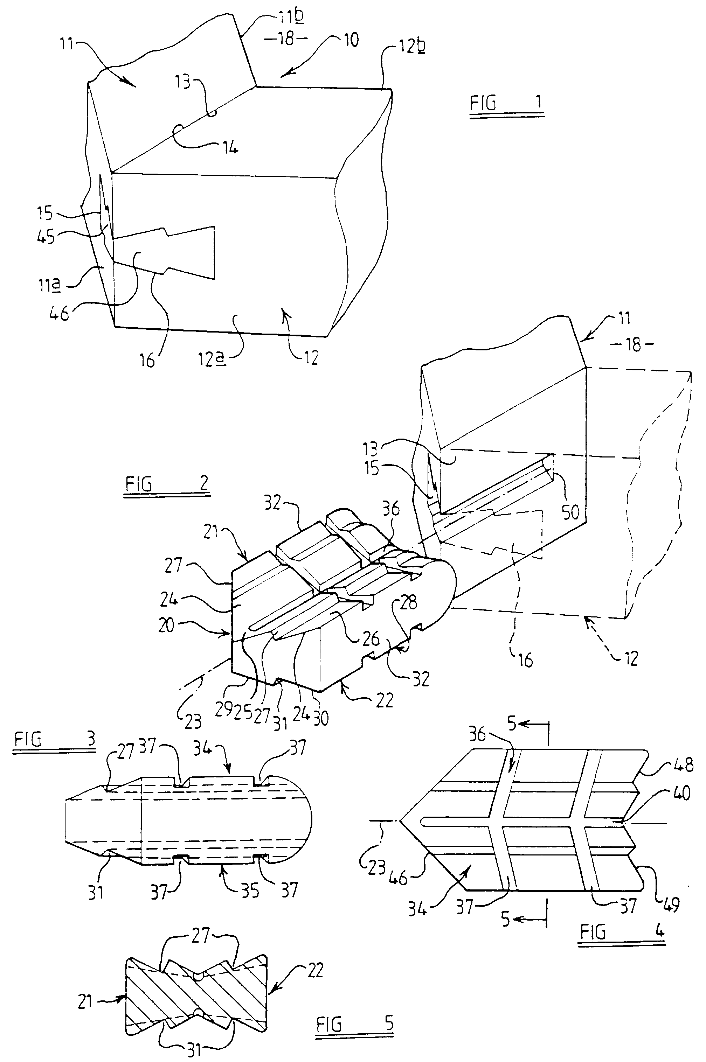

Referring to the drawings, a frame 10 comprises a first generally elongate member 11 and a second generally elongate member 12, adapted to be connected together at, or substantially at, 90° to one another. To this end, the generally elongate member 11 has a mitred end face 13, whilst generally elongate members 12 also has a mitred end face 14, the mitred end faces 13 and 14 adapted to be brought together as indicated in figure 1 at a corner of the frame.

Each mitred end face 13 and 14, has a slot 15,16, respectively provided therein, which extends from a respective external surface 11a and 12a of the generally elongate members 11 and 12, along the mitred end face 13, 14 inwardly towards an opening 18 afforded by the frame 10.

In another arrangement though, if desired the slots 15, 16 may extend from a respective internal surface 11b and 12b of the members 11, 12. In this event, the connector 20 may have a pair of inclined surfaces at one end subtending an included angle between them rather than the external angle subtended by surfaces 45, 46 of the connector 20 shown in the drawings, so as to conform to the shape of the internal surfaces 11b, 12b of the members 11, 12.

The slots 15 and 16 conform in configuration to the shape of a connector 20 such that when the connector 10 is received in the slots 15 and 16, the mitred end faces 13 and 14 are drawn together and the elongate frame members 11 and 12 are thus connected together.

Referring particularly to figures 2 to 5, the connector 20 comprises a first part 21 and a second part 22, arranged side by side and connected together along a centre line 23. Each part 21 and 22 is of generally the same but opposite configuration having a first side wall 24 arranged in two sections 25 and 26, with a step 27 between the sections 25 and 26. In this example, a second opposite side wall 28 of the connector 20 is also provided in two sections 29 and 30, with a step 31 between them. The opposite side walls 24 and 28 generally converge or at least, the corresponding opposite side wall sections 25 and 29 converge and the corresponding opposite side wall sections 26 and 30 converge, such that the connector 20 has a minimum thickness at centre line 23, and a maximum thickness at the side edges 32.

The first upper and second lower side wall surfaces 34 and 35 of the connector 20, are provided with a lattice of grooves 36, there being in this example, two grooves 37 on upper side surface 34 extending laterally across the connector, and a similar pair of grooves 38 on the lower side wall surface 35, also extending laterally across the connector 20, and there being a groove 40 which extends substantially along the length of the connector 20 generally parallel to the centre line 23. In another example, two, three or more such longitudinal grooves may be provided.

Other arrangements of grooves may be provided as desired.

Each part 21,22, of the connector 20 has a first end surface 45,46, respectively, the first end surfaces 45 and 46 being arranged generally perpendicularly to one another, for a purpose hereinafter explained. The opposite end surfaces 48 and 49 of the connector 20 are generally co-extensive and rounded as shown in figure 3, and each conform generally to the configurations of end faces 50, of the slots 15,16 in which the connector 20 is to be provided.

Preferably the slots 15 and 16 in the mitred end faces 13 and 14 do not extend rightway through the elongate members 11 and 12 across the entire extent of the mitred end faces 13 and 14, but, when the mitred end faces 13 and 14 are brought together, the slots 15 and 16 present a blind opening to the connector 20. The length of the blind opening preferably is close to that of the overall length of the connector 20, such that when the connector 20 is inserted into the blind hole, the end surfaces 48 and 49 of the connector 20 abut end faces 50 of the slots 15 and 16, and the end surfaces 45 and 46 of the connector which are inclined generally perpendicularly to one another, lie generally in the same planes as the corresponding external surfaces 11a and 12a of the generally elongate members 11 and 12.

Any air trapped within the blind opening between the end faces 50 and of the grooves, and the end faces 48 and 49 of the connector 20, is permitted to escape through the latticework 36 of grooves provided in the side wall surfaces 34 and 35 of the connector 20.

Preferably the connector 20 is adhered in position within the grooves 15 and 16. Adhesive may be introduced into the blind hole prior to the connector 20 being inserted, the latticework of grooves 36 permit the spread of adhesive across the entire side wall surfaces 34 and 35 of the connector 20 as it is introduced, and excessive adhesive is permitted to escape again via the latticework 36 of grooves.

The connector 20 is conveniently moulded in a plastics material such as an elastomeric reinforced nylon, but could be formed in other materials such as timber, if desired.

Various modifications are possible without departing from the scope of the invention. For example, instead of the two parts 21,22 of the connector 20 each having a single step 27,31 in each of the respective side walls, more than one step may be provided or a step may be provided in one of each of the side walls 24,29 only. The steps however need to extend from one end of the connector 20 to the other to permit the connector to be inserted into the slots 15 and 16.

In the arrangement shown in figure 1, a single connector 20 only is provided to connect the mitred end faces 13 and 14 together and hence single slots 15 and 16 are provided in each of the mitred end faces 13 and 14. In another example, a plurality of such connectors 20 each received in corresponding slots 15 and 16 may be provided to connect the frame members 11,12 together.

The invention may be applied to other than mitred joints, for example to butt or other joints where a connector such as connector 20 is used to connect two members together.

The invention provides advantages over known arrangements in which slots provided in mitred end faces extend right way across the mitred end faces, from the external surfaces 11a, 12a into the opening 18 allowed by the frame 10, because, whether the connector 20 is interlocked from the external or internal surfaces of the frame member, the integrity of the frame 10 is not breached. In the arrangement of the invention, it may be necessary to provide sealant on the external surfaces 11a, 12a (or internal surfaces 11b, 12b of the frame) to seal the slots 15 and 16 to the inclined surfaces 45 and 46 of the connector 20. However if sufficient adhesive with good sealing properties is used, such additional sealing may not be required.

Particularly where the invention is applied to a joint between timber members, by virtue of the configuration of the connectors 20, natural movements of the timber are permitted, without such movements causing stress in the joint which could lead to a breach of joint integrity.

The present invention permits a frame 10 readily to be made up with each corner or other joint of the frame having one or more connectors 20 as described to connect frame members together at the joint.

The features disclosed in the foregoing description the following claims or the accompanying drawings, expressed in their specific forms or in terms of a means for performing the disclosed function, or a method or process for attaining the disclosed result, or a class or group of substances or compositions, as appropriate, may, separately, or in any combination of such features, be utilised for realising the invention in diverse forms thereof.

## Claims

1. A connector (20) for connecting together two generally elongate members (11,12) which have faces (13,14) adapted to be joined together by the connector (20), the connector (20) comprising first and second parts (21,22) arranged side by side, the first and second parts (21,22) each having a first side wall (24) arranged in two sections(25,26) with a step (27) between the sections, the steps (27) extending from one end of the connector (20) towards the other end, and a second side wall (28) of each part (21, 22) generally converging with the opposite first side wall (24), such that each part (21, 22) of the connector (20) has a thickness where the first and second parts (21, 22) meet, less than the thickness of the connector (20) at a side edge thereof (32).

2. A connector (20) according to claim 1 characterised in that the second side wall (28) of each part (21, 22), is also arranged in two sections (29, 30) with a step (27) between the sections, the sections of the second side wall (28) of each part (21, 22) generally converging with the opposite first side wall (24) sections.

3. A connector (20) according to claim 1 or claim 2 characterised in that the side wall surfaces (24, 28) of the connector (20) have grooves (36) formed therein which allow liquid adhesive to spread over the entire side wall surfaces of the connector (20) whereby the connector (20) is adapted to be adhered in position.

4. A connector (20) according to any one of claims 1 to 3 characterised in that the connector (20) is made of an elastomeric reinforced nylon.

5. A connector (20) according to any one of claims 1 to 4 characterised in that end surfaces (45, 46) of the two parts (21, 22) at one end of the connector (20) are at, or substantially at, 90° to one another so as to lie in generally the same planes, as external or internal surfaces of generally perpendicular generally elongate members, from which slots (15, 16) extent, such that the connector (20) is adapted to connect together mitred end faces (11a, 12a; 11b, 12b) of the elongate members (11, 12).

6. A connector (20) according to any one of claims 1 to 5 characterised in that end surfaces (48, 49) of the two parts (21, 22) of the connector (20) which in use, lie innermost of the slots (15, 16), are shaped to conform to end faces (50) of the slots (15, 16) in the faces of the generally elongate members (11, 12) such that no cavity is provided between the end surfaces (48, 49) of the connector (20) and the end faces (50) of the slots (15, 16).

7. A method of making a frame (10) comprising the steps of taking two generally elongate members (11, 12) and providing a face (13, 14) on each, providing a slot (15, 16) in each of the faces (13, 14) to receive part of a connector (20), the slots (15, 16) each comprising a first side wall arranged in two sections with a step between the sections, and a second side wall which generally converges with the opposite first side wall so that each slot has a minimum dimension where the slot opens to the face (13, 14) and a maximum dimension within the thickness of the generally elongate member (11, 12), the slots (15, 16) each being adapted to receive a part of a connector (20) in accordance with any one of claims 1 to 6.

8. A method according to claim 7 characterised in that the faces (13, 14) provided on the elongate members (11, 12) are mitred end faces and the slots (15, 16) open to the mitred end faces (13, 14) and extend in a direction from what will be the outside of the frame (10) towards what will be an opening (18) defined by the frame (10) or vice versa, and the slots (15, 16) terminate without extending right across the mitred end faces (13, 14) such that when the mitred end faces (13, 14) are brought together, a blind hole is presented to the connector (20).

9. A method according to claim 8 characterised in that the extend of the slots (15, 16) across the mitred end faces (13, 14) and the length of the connector (20) are such that when the connector (20) is fully introduced into the slots (15, 16), the innermost end surface (45, 46) of the parts (21, 22) of the connector (20) lie in contact with, or at least very closely adjacent to, the end faces (50) of the slots, (15, 16) and the opposite end surfaces (45, 46) of the parts (21, 22) of the connector (20) lie at least close to the external surfaces (11a, 12a) of the generally perpendicular generally elongate members (11, 12) from which the slots (15, 16) extend.

10. A method according to any one of claims 7 to 9 characterised in that the connector (20) is adhered in position in the slots (15, 16).
